# EUROPÄISCHE PATENTANMELDUNG

(11) **EP 2 933 515 A2**
(43) Veröffentlichungstag der Anmeldung: **21.10.2015**
(21) Anmeldenummer: 15160209.1
(22) Anmeldetag: 23.03.2015
(51) Int. Cl.: F16D 13/75, F16D 13/72

(54) **Reibungskupplung mit zweiteiliger Anpressplatte**

(30) Priorität: 17.04.2014 DE 102014207387
(71) Anmelder: Schaeffler Technologies AG & Co. KG, 91074 Herzogenaurach (DE)
(72) Erfinder: Voorspoels, Ludovic, 67410 Drusenheim (FR)

(57) **Zusammenfassung**

Die Erfindung betrifft eineReibungskupplung (1) aufweisend eine Nachstelleinrichtung (2), ein Kupplungsgehäuse (3) und eine Anpressplatte, die gegenüber dem Kupplungsgehäuse (3) axial mittels einer Hebelfeder (6) verlagerbar ist. Die Anpressplatte ist zweiteilig ausgebildet und weist einen ersten Anpressplattenteil (4) und einen zweiten Anpressplattenteil (5) auf, wobei ein axialer Abstand zwischen den Anpressplattenteilen (4, 5) bei einer Relativdrehung des zweiten Anpressplattenteils (5) gegenüber dem ersten Anpressplattenteil (4) mittels der Nachstelleinrichtung (2) veränderbar ist.

## Beschreibung

Die Erfindung betrifft eine Reibungskupplung mit einer zweiteiligen Anpressplatte.

Aus dem Stand der Technik ist eine Vielzahl von Reibungskupplung bekannt. Gattungsgemäße Reibungskupplung weisen eine Nachstelleinrichtung, ein Kupplungsgehäuse und eine Anpressplatte auf, die gegenüber dem Kupplungsgehäuse axial mittels einer Hebelfeder verlagerbar ist.

Die Nachstelleinrichtungen der Reibungskupplungen weisen einen Verstellring oder einen Rampenring auf, der mittels einer von einer Antriebsklinke verdrehbaren Spindel nachgestellt werden kann, um einen Verschleiß der Reibbeläge zu kompensieren.

Nachteilig am Stand der Technik ist, dass die Anpressplatte der Reibungskupplung einer hohen Temperaturbelastung im Kupplungsbetrieb ausgesetzt ist.

Entsprechende Reibungskupplungen sind in der DE 102011086995 A1, der DE 102011081152 A1 und der DE 102011018593 A1 beschrieben.

Es besteht somit die technische Aufgabe, eine Reibungskupplung bereitzustellen, bei der die Anpressplatte derart gestaltet ist, dass eine verbesserte Wärmeleitung erzeugt werden kann. Ferner soll eine alternative Methode für eine Verschleißsensierung und eine Verschleißnachstellung ermöglicht werden.

Die Aufgabe wird erfindungsgemäß insbesondere gelöst durcheine Reibungskupplung aufweisend eine Nachstelleinrichtung, ein Kupplungsgehäuse und eine Anpressplatte, die gegenüber dem Kupplungsgehäuse axial mittels einer Hebelfeder verlagerbar ist, dadurch gekennzeichnet, dass die Anpressplatte zweiteilig ausgebildet ist und einen ersten Anpressplattenteil und einen zweiten Anpressplattenteil aufweist, wobei ein axialer Abstand zwischen den Anpressplattenteilen bei einer Relativdrehung des zweiten Anpressplattenteils gegenüber dem ersten Anpressplattenteil mittels der Nachstelleinrichtung veränderbar ist.

Durch das Vorsehen der zweiteilig ausgebildeten Anpressplatte kann eine verbesserte Wärmeleitung zwischen den beiden Anpressplattenteilenerzielt werden. Die zwei Anpressplattenteile geben die Wärme schneller an die Umgebung ab.

Bevorzugt ist die Nachstelleinrichtung eine Verschleißnachstelleinrichtung.

Bevorzugt sind die Anpressplattenteile aus Guss oder aus einem Stahlwerkstoff gefertigt.

In einer weiteren erfindungsgemäßen Ausführungsformweist die Nachstelleinrichtung einen Spindeltrieb auf, der auf seiner der Hebelfeder zugewandten Seite des ersten Anpressplattenteils angeordnet ist.

Auf diese Weise ist der Spindeltrieb direkt auf dem ersten Anpressplattenteil befestigt.

In einer weiteren erfindungsgemäßen Ausführungsform ist der Spindeltrieb, der durch ein Ritzel, das mit einer Antriebsklinke zusammenwirkt, angetrieben, wobei mindestens eine Sperrklinke in Eingriff mit dem Ritzel ist, um eine Rückdrehung des Ritzels zu begrenzen und wobei eine das Ritzel tragende Welle der an einem Spindelhalter gelagert ist.

In einer weiteren erfindungsgemäßen Ausführungsformweist der erste Anpressplattenteil auf seiner der Hebelfeder zugewandten Rückseite Tellerfedernocken zur verkippbaren Anlage der Hebelfeder auf.

Aufgrund der Verwendung der zweiteilig ausgebildeten Anpressplattenteile stellen sich Temperaturen im Kontaktbereich Tellerfeder zur Nockenwelle ein, die deutlich geringer sind, als die im Stand der Technik bekannten Temperaturen.

In einer weiteren erfindungsgemäßen Ausführungsformerstreckt sich eine Spindelmutter des Spindeltriebs in axialer Richtung durch ein in Umfangsrichtung verlaufendes Langloch durch den ersten Anpressplattenteil.

Bevorzugt erstreckt sich das Langloch über einen Teilbereich des ersten Anpressplattenteils. Auf diese Weise ist die Spindelmutter auf einfache Weise entlang eines definierten Bereichs führbar.

In einer weiteren erfindungsgemäßenAusführungsformweist der zweite Anpressplattenteil auf seiner der Reibfläche in axialer Richtung gegenüberliegenden Seite eine Eingriffsöffnung für die Spindelmutter auf.

Auf diese Weise wirdeine Aufnahmemöglichkeit für die Spindelmutter geschaffen. Auf einen Verstellring oder einen Rampenring, wie er aus dem Stand der Technik bekannt ist, kann damit verzichtet werden.

Durch eine Drehung des Ritzels des Spindeltriebs verschiebt sich die Spindelmutter entlang des in Umfangsrichtung verlaufenden Langlochs des ersten Anpressplattenteils. Da die Spindelmutter in die Eingriffsöffnung des zweiten Anpressplattenteils eingreift, erfährt der zweite Anpressplattenteil eine entsprechende Verdrehung gegenüber dem ersten Anpressplattenteil.

In einer weiteren erfindungsgemäßen Ausführungsformsind auf seiner der Hebelfederin axialer Richtung gegenüberliegenden Seite des ersten Anpressplattenteils in Umfangsrichtung verlaufende Rampen ausgebildet.

In einer weiteren erfindungsgemäßen Ausführungsformweist der zweite Anpressplattenteil zu den Rampen des ersten Anpressplattenteils entsprechende Gegenrampen auf.

Infolge einer Verdrehung des zweiten Anpressplattenteils gegenüber dem ersten Anpressplattenteil ist ein axialer Abstand zwischen dem ersten Anpressplattenteil und dem zweiten Anpressplattenteil erzeugbar. Hierfür verantwortlich sind die in Umfangsrichtung verlaufenden Rampen des ersten Anpressplattenteils und die entsprechend ausgestalteten Gegenrampen des zweiten Anpressplattenteils. Durch die Ausgestaltung der Rampen und der Gegenrampe lässt sich ein Eingriff der beiden Anpressplattenteile lösen. Dabei gleiten die Rampen aufeinander.

In einer weiteren erfindungsgemäßen Ausführungsform ist der zweite Anpressplattenteil mittels Blattfedern drehfest und in axialer Richtung begrenzt verlagerbar am Kupplungsdeckel befestigt.

Auf diese Weise kann das Risiko eines Ausknickens der Blattfedern stark reduziert werden.

In einer weiteren erfindungsgemäßen Ausführungsformerfolgt eine Befestigung am Kupplungsdeckel mittels am zweiten Anpressplattenteil vorgesehenen Lappen.

Damitist der zweite Anpressplattenteil in linearer Richtung auf eine einfache Weise verlagerbar.

Vorzugsweise ist die Befestigung eine Schraub- oder eine Nietverbindung. Bevorzugt kragen die Lappen nach außen hin aus und sind symmetrisch in Umfangsrichtung am zweiten Anpressplattenteil angeordnet sind. Besonders bevorzugt weist der zweite Anpressplattenteil mindestens drei Lappen auf.

Die Erfindung wird nun beispielhaft durch Figuren veranschaulicht. Es zeigen:
Fig. 1 einen schematischen Teilschnitt durch eine erfindungsmäße Reibungskupplung,
Fig. 2 eine Detailansicht zweier Bauteileder erfindungsmäßen Reibungskupplung aus Fig. 1,
Fig. 3a eine schematische Draufsicht auf einen ersten Anpressplattenteil der erfindungsmäßen Reibungskupplung aus Fig. 1,
Fig. 3b einen Schnitt A-A durch die Fig. 3a,
Fig. 3c einen Schnitt B-B durch die Fig. 3a,
Fig. 4a eine schematische Draufsicht auf einen zweiten Anpressplattenteil der erfindungsmäßen Reibungskupplung aus Fig. 1,
Fig. 4b einen Schnitt C-C durch die Fig. 4a,
Fig. 4c einen Schnitt D-D durch die Fig. 4a und
Fig. 5 bis Fig. 8 schematische Teilschnitte durch die erfindungsmäße Reibungskupplung in verschiedenen Betriebszuständen.

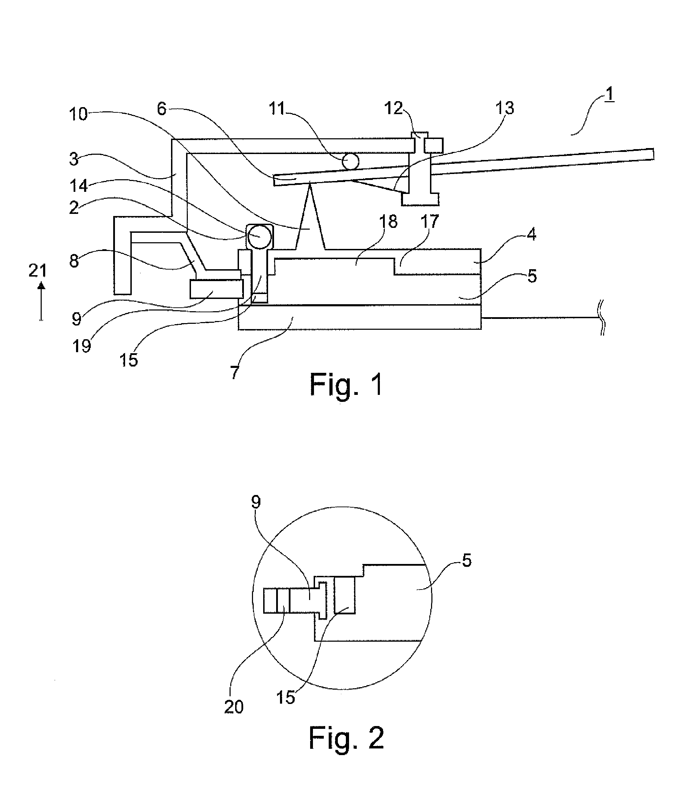

Fig. 1 zeigt einen schematischen Teilschnitt durch eine erfindungsmäße Reibungskupplung.

Die Reibungskupplung 1 weist eine (Verschleiß-)Nachstelleinrichtung 2, ein Kupplungsgehäuse 3 und eine zweiteilig ausgebildete Anpressplatte 4, 5 auf. Sie zweiteilig ausgebildete Anpressplatte 4, 5 ist gegenüber dem Kupplungsgehäuse 3 axial mittels einer Hebelfeder 6 verlagerbar. An dem Kupplungsgehäuse 3 ist mittels mehrerer über den Umfang verteilter Befestigungsbolzen, von denen nur ein Bolzen 12 dargestellt ist, die Hebelfeder 6 gelagert. Die Hebelfeder 6 wird von einem Drahtring 11 und einer Stützfeder 13, die die Hebelfeder einspannen.

Die axial bewegbare zweiteilige Anpressplatte 4, 5kann mit Hilfe der Hebelfeder 6zu einer nicht dargestellte Gegenplatte bewegt werden, um eine mit Reibflächen (Reibbelägen) versehene Kupplungsscheibe 7 zwischen der zweiteiligen Anpressplatte 4, 5 und der Gegenplatte zum Schließen der Reibungskupplung 1 zu verpressen.

Die zweiteilig ausgebildete Anpressplatte weist einen ersten Anpressplattenteil 4 und einen zweiten Anpressplattenteil 5 auf. Ein axialer Abstand zwischen den beiden Anpressplattenteilen 4, 5 ist bei einer Relativdrehung des zweiten Anpressplattenteils 5 gegenüber dem ersten Anpressplattenteil 4 mittels der Nachstelleinrichtung 2 veränderbar.

Ein Spindeltrieb 14 der Nachstelleinrichtung 2 ist auf der Rückseite des ersten Anpressplattenteils 4 befestigt ist. Der Spindeltrieb 14 ist durch ein Ritzel, das mit einer Antriebsklinke zusammenwirkt, angetrieben, wobei mindestens eine Sperrklinke in Eingriff mit dem Ritzel ist. Hierdurch ist eine Rückdrehung des Ritzels begrenzt. Eine das Ritzel tragende Welle ist an einem Spindelhalter gelagert. Das Ritzel, die Antriebsklinke, die Sperrklinke und die Welle sind aus Gründen der Übersicht nicht dargestellt.

Der erste Anpressplattenteil 4weist auf seiner der Hebelfeder 6 zugewandten Seite(d.h. auf der Rückseite des erste Anpressplattenteils 4) Tellerfedernocken 10 zur verkippbaren Anlage der Hebelfeder 6 auf.

Eine Spindelmutter 14des Spindeltriebs erstreckt sich in axialer Richtung 21 durch ein in Umfangsrichtung verlaufendes Langloch 16 durch den ersten Anpressplattenteil 4 hindurch.

Der zweite Anpressplattenteil 5weist auf seiner der Reibfläche in axialer Richtung 21 gegenüberliegenden Seite (d.h. auf der Rückseite des zweiten Anpressplattenteils 5) eine Eingriffsöffnung 15 für die Spindelmutter 14 auf.

Aufseiner der Hebelfeder 6 in axialer Richtung 21 gegenüberliegenden Seite des ersten Anpressplattenteils 4 (d.h. auf der Vorderseite des ersten Anpressplattenteils 4) sind in Umfangsrichtung verlaufende Rampen 17 ausgebildet.

Der zweite Anpressplattenteil 5 weist zu den Rampen des ersten Anpressplattenteils 4 entsprechende Gegenrampen 18 auf.

Der zweite Anpressplattenteil 5 ist mittels der Blattfedern 8drehfest und in axialer Richtung 21 begrenzt verlagerbar am Kupplungsdeckel 3 befestigt. Eine Befestigung am Kupplungsdeckel 3erfolgt mittels am zweiten Anpressplattenteil 5 vorgesehenen Lappen 9.

In Fig. 1 ist die Kupplung in einem ersten eingerückten Zustand dargestellt. Der zweite Anpressplattenteil 5 ist dabei in direktem Kontakt mit der Kupplungsscheibe 7. Der erste Anpressplattenteil 4 liegt dicht an dem zweiten Anpressplattenteil 5 an. Die Rampen 17 und die Gegenrampen 18 greifen ineinander. Der zweite Anpressplattenteil 5 ist vollständig zurückgedreht.

Fig. 2 zeigt eine Detailansicht zweier Bauteile der erfindungsmäßen Reibungskupplung aus Fig. 1.

Der zweite Anpressplattenteil 5 weist die Eingriffsöffnung 15 auf. Die Eingriffsöffnung 15 ist als eine zylindrische Ausnehmung ausgebildet. Die Eingriffsöffnung 15 dient der Aufnahme der Spindelmutter 14.

Der dargestellte Lappen 9 weist ebenfalls eine Ausnehmung 19 auf. Die Ausnehmung 19 dient der Aufnahme eines Befestigungsmittels um den Lappen 3 mit der Blattfeder zu verbinden.

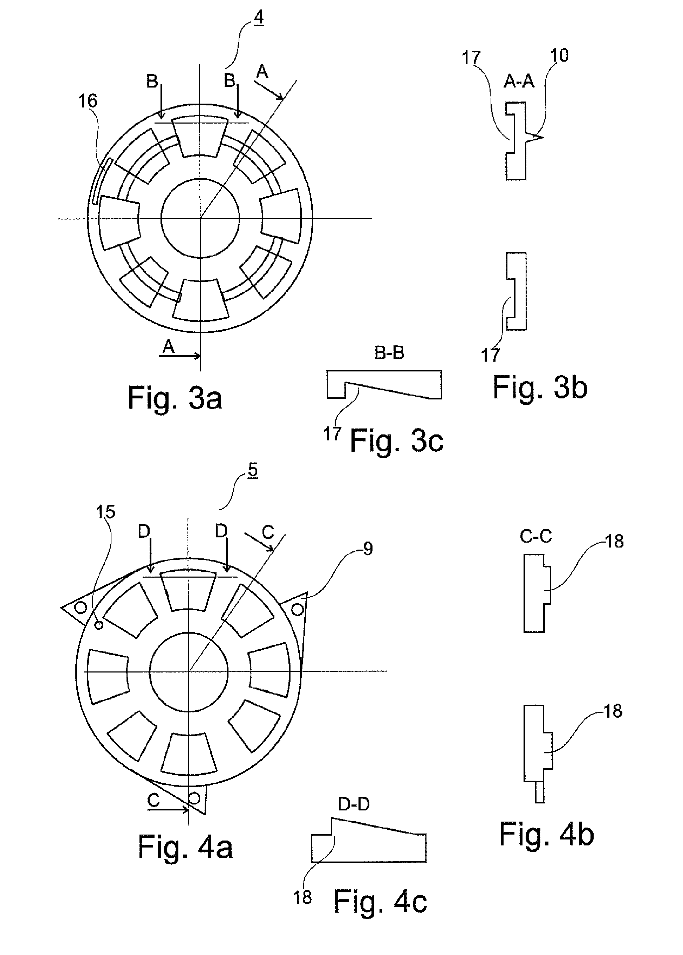

Fig. 3a zeigt eine schematische Draufsicht auf einen ersten Anpressplattenteil der erfindungsmäßen Reibungskupplung aus Fig. 1.

Der erste Anpresslattenteil 4 weist ein in Umfangsrichtung verlaufendes Langloch 16 auf. Das Langloch 16 verläuft entlang einem Randbereich des ersten Anpresslattenteils 4.

Fig. 3b zeigt einen Schnitt A-A durch die Fig. 3a und Fig. 3c zeigt einen Schnitt B-B durch die Fig. 3a.

Auf der Vorderseite des ersten Anpressplattenteils 4 sind mehrere in Umfangsrichtung verlaufende Rampen 17 ausgebildet. Im Schnitt A-A ist die Nockenwelle 10 dargestellt.

Fig. 4a zeigt eine schematische Draufsicht auf einen zweiten Anpressplattenteil der erfindungsmäßen Reibungskupplung aus Fig. 1.

Der zweite Anpressplattenteil 5 weist auf seiner der Reibfläche in axialer Richtung 21 gegenüberliegenden Seite, d.h. auf der Rückseite des zweiten Anpressplattenteils 5, die Eingriffsöffnung 15 für die Spindelmutter 14 auf.

Ferner weist der zweite Anpressplattenteil 5 drei Lappen 9 auf, die symmetrisch in Umfangsrichtung am zweiten Anpressplattenteil 5 verteilt sind und auskragen.

Fig. 4b zeigt einen Schnitt C-C durch die Fig. 4a und Fig. 4c zeigt einen Schnitt D-D durch die Fig. 4a.

Der zweite Anpressplattenteil 5 weist zu den Rampen 17 des ersten Anpressplattenteils 4 entsprechende Gegenrampen 18 auf seiner Rückseite auf.

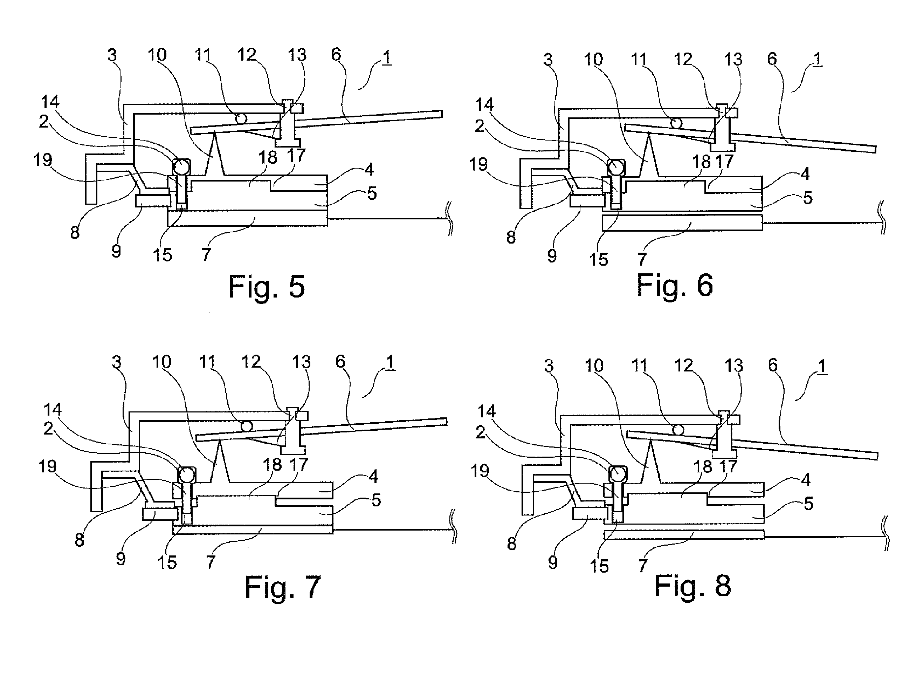

Fig. 5 bis Fig. 8 zeigen schematische Teilschnitte durch die erfindungsmäße Reibungskupplung in verschiedenen Betriebszuständen.

In Fig. 5 ist die Kupplung in einem ersten eingerückten Zustand dargestellt. Der zweite Anpressplattenteil 5 ist dabei in direktem Kontakt mit der Kupplungsscheibe 7. Der erste Anpressplattenteil 4 liegt dicht an dem zweiten Anpressplattenteil 5 an. Die Rampen 17 und die Gegenrampen 18 greifen ineinander, so dass ein Eingriff entsteht. Der zweite Anpressplattenteil 5 ist vollständig zurückgedreht.

In diesem Zustand erleidet die Kupplungsscheibe 7 keinen Verschleiß.

In Fig. 6 ist die Kupplung in einem ersten ausgerückten Zustand dargestellt. Der zweite Anpressplattenteil 5 befindet sich nicht mehr im direktem Kontakt mit der Kupplungsscheibe 7. Ein Luftspalt erstreckt sich zwischen der zweiten Anpressplattenteil 5 und der Kupplungsscheibe 7.

Der erste Anpressplattenteil 4 liegt noch immer dicht an dem zweiten Anpressplattenteil 5 an. Die Blattfedern 8 ziehen an den Lappen 9 des zweiten Anpressplattenteils 5 beide Anpressplattenteile 4 und 5 in axialer Richtung 21 weg von der Kupplungsscheibe 7. Dabei greifen die Rampen 17 und die Gegenrampen 18 ineinander.

In Fig. 7 ist die Kupplung in einem zweiten eingerückten Zustand dargestellt. Der zweite Anpressplattenteil 5 ist dabei in direktem Kontakt mit der Kupplungsscheibe 7.

Durch eine Drehung des Ritzels des Spindeltriebs 14verschiebt sich die Spindelmutter 14 entlang des in Umfangsrichtung verlaufenden Langlochs 16 des ersten Anpressplattenteils 4. Da die Spindelmutter 19 in die Eingriffsöffnung 15 des zweiten Anpressplattenteils 5 eingreift, erfährt der zweite Anpressplattenteil 5 eine entsprechende Verdrehung gegenüber dem ersten Anpressplattenteil 4.

Infolge der Verdrehung des zweiten Anpressplattenteils 5 gegenüber dem ersten Anpressplattenteil wird ein axialer Abstand zwischen dem ersten Anpressplattenteil 4 und dem zweiten Anpressplattenteil 5 erzeugt. Hierfür verantwortlich sind die in Umfangsrichtung verlaufenden Rampen 17 des ersten Anpressplattenteils 4 und die entsprechend ausgestalteten Gegenrampen 18 des zweiten Anpressplattenteils 5.Dabei gleiten die Rampen aufeinander. Durch die Ausgestaltung der Rampen und der Gegenrampe lässt sich ein Eingriff der beiden Anpressplattenteile 4, 5 lösen. Durch die Ausgestaltung der Rampen 17 und der Gegenrampen 18 löst sich der Eingriff, wie in Fig. 5 und Fig. 6 beschrieben.

In diesem Zustand erleidet die Kupplungsscheibe 7 Verschleiß.

In Fig. 8 ist die Kupplung in einem zweiten ausgerückten Zustand dargestellt. Der zweite Anpressplattenteil 5 befindet sich nicht mehr im direktem Kontakt mit der Kupplungsscheibe 7. Ein Luftspalt erstreckt sich zwischen dem zweiten Anpressplattenteil 5 und der Kupplungsscheibe 7.

Beim Ausrücken ist das Ritzels des Spindeltriebs 14, wie in Fig. 7 beschrieben,gedreht, wodurch die Spindelmutter 19 verschoben ist.Infolge des Verschleißes ist die Kupplungsscheibe 7 dünner geworden. Der zweite Anpressplattenteil 5 ist vollständig gedreht.

Durch das Vorsehen einer zweiteilig ausgebildeten Anpressplatte stellt sich eine verbesserte Wärmeleitung zwischen den beiden Anpressplattenteilen ein, als bei einer einteilig ausgebildeten Platte. Beide Anpressplattenteile geben die Wärme schneller ab. Fernerstellen sich Temperaturen im Kontaktbereich Tellerfeder zur Nockenwelle ein, die deutlich geringer sind.

### Bezugszeichenliste

- 1: Reibungskupplung
- 2: Nachstelleinrichtung
- 3: Kupplungsgehäuse
- 4: erster Anpressplattenteil
- 5: zweiter Anpressplattenteil
- 6: Hebelfeder
- 7: Kupplungsscheibe
- 8: Blattfeder
- 9: Lappen
- 10: Nockenwelle
- 11: Drahtring
- 12: Bolzen
- 13: Stützfeder
- 14: Spindeltrieb
- 15: Eingriffsöffnung
- 16: Langloch
- 17: Rampe
- 18: Gegenrampe
- 19: Spindelmutter
- 20: Ausnehmung
- 21: Axiale Richtung

## Patentansprüche

1. Reibungskupplung (1) aufweisend eine Nachstelleinrichtung (2), ein Kupplungsgehäuse (3) und eine Anpressplatte, die gegenüber dem Kupplungsgehäuse (3) axial mittels einer Hebelfeder (6) verlagerbar ist, **dadurch gekennzeichnet, dass** die Anpressplatte zweiteilig ausgebildet ist und einen ersten Anpressplattenteil (4) und einen zweiten Anpressplattenteil (5) aufweist, wobei ein axialer Abstand zwischen den Anpressplattenteilen (4, 5) bei einer Relativdrehung des zweiten Anpressplattenteils (5) gegenüber dem ersten Anpressplattenteil (4) mittels der Nachstelleinrichtung (2) veränderbar ist.

2. Reibungskupplung (1) gemäß Anspruch 1, wobei die Nachstelleinrichtung (2) einen Spindeltrieb (14) aufweist, der auf seiner der Hebelfeder (6) zugewandten Seite des ersten Anpressplattenteils (4) angeordnet ist.

3. Reibungskupplung (1) gemäß Anspruch 2, wobei der Spindeltrieb (14), der durch ein Ritzel, das mit einer Antriebsklinke zusammenwirkt, angetrieben ist, wobei mindestens eine Sperrklinke in Eingriff mit dem Ritzel ist, um eine Rückdrehung des Ritzels zu begrenzen und wobei eine das Ritzel tragende Welle der an einem Spindelhalter gelagert ist.

4. Reibungskupplung (1) gemäß einem der vorherigen Ansprüche, wobei der erste Anpressplattenteil (4) auf seiner der Hebelfeder (6) zugewandten Rückseite Tellerfedernocken (10) zur verkippbaren Anlage der Hebelfeder (6) aufweist.

5. Reibungskupplung (1) gemäß einem der vorherigen Ansprüche 2 bis 4, wobei eine Spindelmutter (19) des Spindeltriebs(14) sich in axialer Richtung (21) durch ein in Umfangsrichtung verlaufendes Langloch (16) durch den ersten Anpressplattenteil (4) erstreckt.

6. Reibungskupplung (1) gemäß Anspruch 5, wobei der zweite Anpressplattenteil (5) auf seiner der Reibfläche in axialer Richtung (21) gegenüberliegenden Seite eine Eingriffsöffnung (15) für die Spindelmutter (19) aufweist.

7. Reibungskupplung (1) gemäß einem der vorherigen Ansprüche, wobei auf seiner der Hebelfeder (6) in axialer Richtung (21) gegenüberliegenden Seite des ersten Anpressplattenteils (4) in Umfangsrichtung verlaufende Rampen (17) ausgebildet sind.

8. Reibungskupplung (1) gemäß Anspruch 7, wobei der zweite Anpressplattenteil (5) zu den Rampen des ersten Anpressplattenteils (4) entsprechende Gegenrampen (18) aufweist.

9. Reibungskupplung (1) gemäß einem der vorherigen Ansprüche, wobei der zweite Anpressplattenteil (5) mittels Blattfedern (8) drehfest und in axialer Richtung (21) begrenzt verlagerbar am Kupplungsdeckel (3) befestigt ist.

10. Reibungskupplung (1) gemäß Anspruch 9, wobei eine Befestigung am Kupplungsdeckel (3) mittels am zweiten Anpressplattenteil (5) vorgesehenen Lappen (6) erfolgt.
